# NEUE EUROPÄISCHE PATENTSCHRIFT

(11) **EP 2 411 712 B2**
(45) Veröffentlichungstag und Bekanntmachung des Hinweises auf die Entscheidung über den Einspruch: **29.11.2017**
(45) Hinweis auf die Patenterteilung: 05.06.2013
(21) Anmeldenummer: 10709545.7
(22) Anmeldetag: 19.03.2010
(51) Int. Cl.: F16K 11/07

(54) **UMSCHALTVENTIL FÜR EIN HOCHVISKOSES MEDIUM**
DIVERTER VALVE FOR HIGHLY VISCOUS LIQUID
SOUPAPE DE COMMUTATION POUR LIQUIDES À VISCOSITÉ ÉLEVÉE

(30) Priorität: 23.03.2009 DE 102009014029
(43) Veröffentlichungstag der Anmeldung: 01.02.2012
(73) Patentinhaber: Nordson Holdings S.à r.l. & Co. KG, 40699 Erkrath (DE)
(72) Erfinder: SCHÄMANN, Ralf, 48147 Münster (DE)
(74) Vertreter: Eisenführ Speiser
(86) Internationale Anmeldenummer: PCT/EP2010/053641
(87) Internationale Veröffentlichungsnummer: WO 2010/108871

(56) Entgegenhaltungen:
- EP-A2- 1 596 039
- WO-A1-2008/111863
- GB-A- 1 215 621

## Beschreibung

Die Erfindung betrifft ein Umschaltventil für ein hochviskoses Medium, insbesondere für eine Kunststoffschmelze, wenigstens umfassend ein Gehäuse mit wenigstens einer Eintrittsöffnung und wenigstens zwei Austrittsöffnungen, welche Öffnungen in einer Ventilbohrung münden, in der ein Ventilstößel gelagert ist, welcher eine Ausnehmung aufweist, über die Eintrittsöffnung wechselweise mit einer der Ausgangsöffnungen zu verbinden ist.

Solche Ventile werden insbesondere für Anlagen für die Aufbereitung und Filtrierung von Kunststoffschmelzen benötigt, die einer Kunststoffverarbeitungsmaschine zugeführt werden. Bekannt sind als Drehventil ausgeführte 3/2-Wege Ventile. Ein Ventilstößel besitzt an seinem Umfang eine Nut. Der Ventilstößel kann so gedreht werden, dass
- über seine Nut ein Fließweg zwischen einer Eintrittsöffnung und einer ersten Austrittsöffnung ausgebildet ist;
- über seine Nut ein Fließweg zwischen einer Eintrittsöffnung und einer zweiten Austrittsöffnung ausgebildet ist; und
- über einen weiteren Mantelabschnitt am Ventilstößel, in den die Nut nicht hineinreicht, die Eintrittsöffnung verschlossen ist und alle Fließwege unterbrochen sind.

Bekannt ist auch, die Nut etwas länger vorzusehen als die Länge des Wandungsabschnitts zwischen den Austrittsöffnungen. Dadurch ergibt sich in einer Übergangsstellung des Ventilstößels jeweils ein kleiner Öffnungsspalt zwischen der Nut und beiden Austrittsöffnungen , um ein Vorfluten der beiden Schmelze führenden Wege mit stark herabgesetzter Strömungsgeschwindigkeit zu ermöglichen.

Dadurch, dass die Nut in allen möglichen Stellungen durchströmt wird, verbleiben keine Totzonen, in denen es zum chemischen und thermischen Abbau von Kunststoff infolge zu langer Verweilzeit und Erwärmung kommen könnte.

Als problematisch hat sich in der Praxis jedoch die Abdichtung erwiesen. Um einerseits Leckströmungen zu vermeiden, andererseits eine freie Verdrehbarkeit zu gewährleisten, muss der Spalt zwischen Ventilstößel und Gehäuse sehr exakt ausgebildet sein, was praktisch nur durch konische Ventilstößel und konische Ventilbohrungen erzielbar ist. Die Fertigung der konischen Geometrien und die Einhaltung gleicher Konuswinkel bei beiden Bauteilen ist fertigungstechnisch sehr aufwendig.

Während des Betriebs ist der konische Ventilstößel vorgespannt, um die Dichtigkeit zu gewährleisten.

Ein zusätzlicher prinzipieller Nachteil des bekannten Umschaltventils besteht darin, dass die Ein- und Austrittsöffnungen radial auf die Ventilbohrungen zulaufen müssen und es daher nicht möglich ist, die beiden Austrittsöffnungen ohne zusätzliche Umlenkstücke auf einer gemeinsamen Fläche nebeneinander zu positionieren.

Auch aus anderen Anwendungsfeldern sind solche Ventile bekannt. Die EP 1 596 039 A2 offenbart ein Ventil für Kraftfahrzeugmotoren. Das dort offenbarte Ventil berücksichtigt jedoch die Besonderheiten von hochviskosen Medien nicht und besitzt mehrere Totzonen, in denen sich ein hochviskoses Medium dauerhaft ablagern kann, weil es nicht durch Turbulenzen fortgespült wird, und es insbesondere unter Wärmeeinfluss zu chemischen Veränderungen kommen kann.

Aufgabe der Erfindung ist es, ein Umschaltventil anzugeben, das einfacher zu fertigen ist und das nebeneinander liegende Austrittsöffnungen ermöglicht.

Eine Lösung wird durch ein Umschaltventil mit den Merkmalen des Anspruch 1 angegeben.

Die für eine axiale Bewegung notwendigen Kräfte können durch einen Hydraulikzylinder oder dgl. einfach erzeugt werden und belasten den Werkstoff des Ventilstößels bei vergleichbaren Durchmesserverhältnissen weniger als im Falle der Torsion eines drehbaren und noch dazu durch eine Nut im Querschnitt geschwächten Ventilstößels. Damit können enge Passungen zwischen Ventilstößel und -bohrung gewählt werden, die eine ausreichende Dichtigkeit bei Durchfluss hochviskoser Medien wie Kunststoffschmelzen gewährleisten. Die zylindrische Form von Ventilbohrung und -stößel erleichtert die Fertigung erheblich.

Erfindungswesentlich ist die Ringnut am Ventilstößel zusammen mit den axialen Zu- und Auslaufzonen.

Mit "Ring" wird insbesondere die Endlosform der Nut charakterisiert. Eine Kreisform ist hingegen nicht erforderlich.

"Axial" bedeutet im Sinne der vorliegenden Erfindung, dass in einem zylindrischen Koordinatensystem die größte

Ausdehnung der Nut in Richtung der Mittelachse verläuft. Eine geradlinige Form der Zu- und Auslaufzonen und deren achsparallele Ausrichtung entspricht zwar der bevorzugten Ausführungsform, weil sie einfach zu fertigen ist. Möglich ist aber auch, dass die Nuten in sich gekrümmt sind und/oder windschief in Bezug auf die Zylinder-Längsachse ausgerichtet sind.

Durch die Einspeisung des Mediums in die geschlossene Ringstruktur in der Zulaufzone erfolgt eine Aufteilung in zwei Teilströme, die in gegensätzlicher Orientierung - der eine mit, der anderen gegen den Uhrzeigersinn - zur Auslaufzone fließen und über diese in einer der Austrittsöffnungen abfließen. In beiden Arbeitsstellungen werden somit immer beide Teilfließwege zugleich durchflossen, und es kommt nicht zu einer längeren Verweilzeit von Materialresten in Teilbereichen der Fließwege.

Vorzugsweise ist die Ringnut derart ausgebildet, dass in beiden Arbeitspositionen zwei hydraulisch gleiche Fließwege entstehen, also Länge und/oder Fließwiderstand zu gleichen Volumenströmen in den Teilkanälen und Verbindungskanalabschnitten führen.

Die bevorzugte Ausführungsform sieht eine symmetrische Ringnut vor, bei der auf gleicher axialer Position am Ventilstößel gleich lange Zu- und Auslaufzonen vorgesehen sind, die wiederum beidseitig über gleich lange Verbindungskanäle verbunden sind. Die Querschnitte der Zu- und Auslaufzonen wie der Verbindungskanäle sind zumindest paarweise ebenfalls gleich.

In einer Variante der Erfindung sind die Verbindungskanäle als Nuten ausgebildet, die sich jeweils zwischen der Zu- und der Auslaufzone entlang des zylindrischen Mantels erstrecken.

In einer weiteren Variante sind als Verbindungskanäle Bohrungen vorgesehen, die sich radial oder in Richtung einer Sekante am zylindrischen Ventilstößel erstrecken und durch welche die Endebereiche der Zu- und der Auslaufzone jeweils miteinander verbunden sind.

Diese symmetrische Fließwegaufteilung ist unabhängig von der Lage der parallel am Zylindermantel des Ventilstößels ausgerichteten Zu- und Auslaufzonen möglich.

Es ist sowohl eine Standardausführungsform möglich, bei der sich Zu- und Auslaufzonen diametral gegenüberliegen, so dass sich ein Eintrittsöffnung und Austrittsöffnungen gegenüberliegen, wie auch eine angepasste Anwendung, bei der in einer Querschnittsansicht die radialen Mittellinien der Zulaufzone und der Auslaufzone einen Winkel von weniger als 180° einschließen.

In den Arbeitsstellungen gibt es jeweils eine vollständige Querschnittsüberdeckung der Zulaufzone mit der Eintrittsöffnung und der Auslaufzone mit einer der Austrittsöffnungen. Die andere Austrittsöffnung ist dann vollständig vom Zylindermantel des Ventilstößels überdeckt und durch diesen abgesperrt.

Um bei einer Inbetriebnahme einer nachgeschalteten Einheit eine allmähliche Füllung zu erreichen oder um Luft aus Einheiten zu verdrängen, die dem Umschaltventil vorgeschaltet sind, kann eine zusätzliche Wartungsstellung des Umschaltventils vorgesehen sein, in der eine nur geringe partielle Überdeckung der Auslaufzone mit den Austrittsöffnungen besteht, so dass ein starkes Strömungshindernis für die Schmelze gebildet wird und dadurch ein langsames Füllen nachgeschalteter Einheiten wie Filtertöpfen mit Schmelze möglich ist. Dazu sollte die Auslaufzone vorzugsweise länger sein als ein Innenwandungsabschnitt der Ventilbohrung, durch welchen die benachbarten Austrittsöffnungen voneinander getrennt sind.

Dies bedeutet, dass die Auslaufzone so positionierbar ist, dass sie gerade eben rechts und links in die lichte Weite der Austrittsöffnungen hinein ragt.

Dabei sollte der axiale Verschiebeweg des Ventilstößels der Länge der Zulaufzone abzüglich des Durchmessers der Eintrittsöffnung entsprechen und der Abstand der äußeren Begrenzungskanten der Austrittsöffnungen dem Verschiebweg zuzüglich der Länge der Auslaufzone. Bei dieser Geometrie bestehen in allen Arbeitsstellungen an den Außenseiten bündige Übergänge von der Auslaufzone in die jeweilige Austrittsöffnung.

Die Erfindung wird nachfolgend anhand von Ausführungsbeispielen mit Bezug auf die Zeichnung näher erläutert. Die Figuren zeigen im Einzelnen:
- Fig. 1: einen Ventilstößel eines Umschaltventils gemäß einer ersten Ausführungsform, in perspektivischer Ansicht;
- Fig. 2, 3: das Umschaltventil in den beiden Arbeitsstellungen im Querschnitt;
- Fig. 4: das Umschaltventil in einer Wartungsstellung im Querschnitt;
- Fig. 5: einen Ventilstößel gemäß einer zweiten Ausführungsform in perspektivischer Ansicht; und
- Fig. 6: eine Detail einer Auslaufzone am Ventilstößel in Draufsicht.

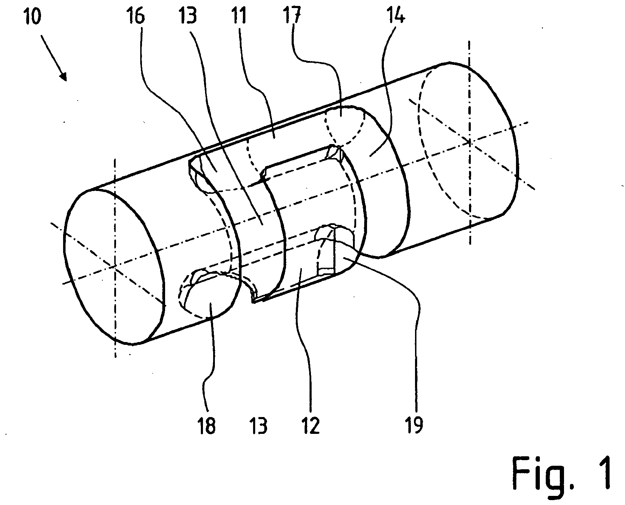

In Figur 1 ist ein Ventilstößel 10 für ein Umschaltventil abgebildet, in dessen Mantelaußenseite eine Ringnut eingebracht ist. Diese setzt sich aus zwei achsparallelen Nuten als Einlaufzone 12 bzw. Auslaufzone 11 und Verbindungskanälen 13, 14 zusammen. Die Verbindungskanäle 13, 14 sind beim dargestellten Ausführungsbeispiel des Ventilstößels 10 als bogenförmige Nuten ausgebildet, die sich entlang einer Kreislinie über den Zylindermantel erstrecken. In Eckbereichen 16, 17, 18, 19 erfolgt die Umleitung der Schmelze um 90° oder in die Austrittsöffnungen 21, 22.

Die Ausbildung der Ringnut ist insgesamt symmetrisch, so dass eine umgekehrte Durchströmung, wo also Ein- und Auslaufzonen vertauscht sind, ebenso möglich ist.

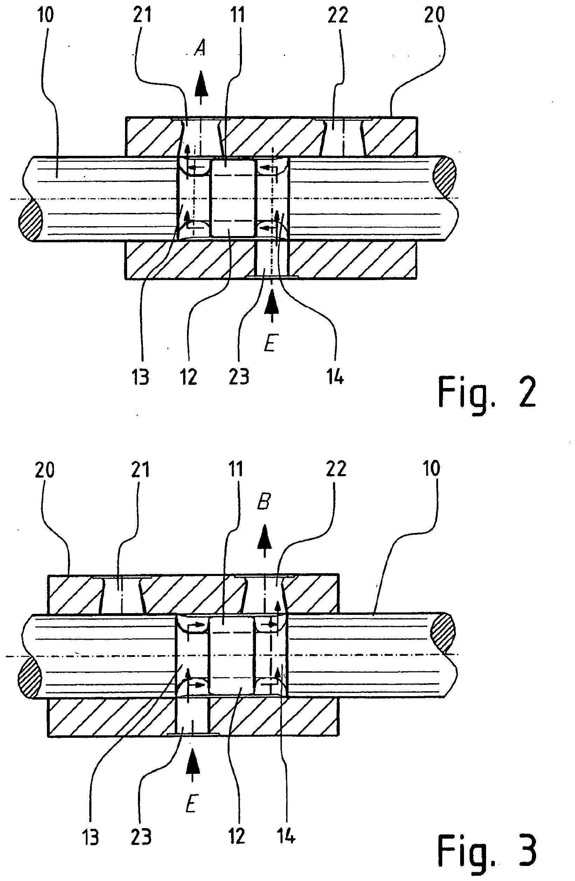

Wie sich die Fließwege gleichmäßig aufteilen, wird bei den Querschnittsdarstellungen eines Umschaltventils 100 in den Fig. 2, 3 deutlich, in denen jeweils der Ventilstößel 10 in ein Ventilgehäuse 20 mit einer Ventilbohrung eingesetzt ist.

An der Unterseite befindet sich eine Eintrittsöffnung 23, die sich zwischen einer Außenseite des Gehäuses 20 und der Ventilbohrung erstreckt. An den Oberseite sind nebeneinander zwei Austrittsöffnungen 21, 22 vorgesehen.

In Fig. 2 ist der Ventilstößel 10 nach links geschoben. Ein eintretender Schmelzezufluss E gelangt durch die Eintrittsöffnung 23 in die Zulaufzone 12 des Ventilstößels 10. Wie durch die Pfeile angedeutet, fließt ein Teil der Strömung entlang der Zulaufzone 12 nach links ab, von dort in den Verbindungskanal 13 und dann durch die Auslaufzone 11 hindurch in die linke Austrittsöffnung 21 als auslaufender Schmelzestrom A. Ein zweiter Teil der Strömung läuft erst durch den Verbindungskanal 14 und dann entlang der Zulaufzone 12 nach links ab, bis in die Austrittsöffnung 21. Die im Inneren des Umschaltventils geteilten Teilströmungen vereinigen sich spätestens an der Austrittsöffnung 21 wieder.

Die Breite des Verbindungskanals 14 stimmt mit der Breite dem Durchmesser der Einlauföffnung 23 überein, und die Ausdehnung der Zulaufzone 12 nach rechts endet hier, so dass ein glatter Übergang gegeben ist. Im Bereich der Austrittsöffnung gehen der linke Verbindungskanal 13, das linke Ende der Auslaufzone und der linke Wandungsabschnitt der Austrittsöffnung 21 ineinander über.

In Fig. 3 ist der Ventilstößel 10 nach rechts verfahren worden, und zwar um eine Strecke, die der Länge der Zulaufzone abzüglich des Durchmessers der Eintrittsöffnung entspricht.

Der Verlauf der Teilströmungen ist jetzt genau gegensätzlich zu der in Fig. 2:
- Eine erste Teilströmung verläuft im Uhrzeigersinn: zunächst durch den Verbindungskanal 13 und dann durch die Auslaufzone 11 bis zu der rechten Austrittsöffnung 22.
- Eine zweite Teilströmung läuft entlang der Zulaufzone 12 nach rechts und dann über den rechten Verbindungskanal 14 in die obere Auslaufzone 11 und darüber in die Austrittsöffnung 22. Dort tritt ein Schmelzestrom B aus.

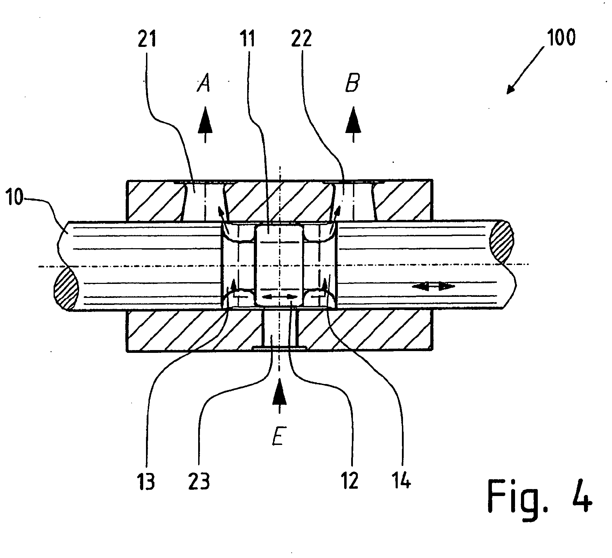

Fig. 4 zeigt die Wartungsstellung: Die Zulaufzone 12 wird aus der Eintrittsöffnung 21 zentral angeströmt, so dass sich der Fluss gleichmäßig auf eine linken und einen rechten Strang verteilt. Die Auslaufzone 11 ist so positioniert, dass Sie jeweils an den Rändern gerade noch die Austrittsöffnungen 21, 22 überdeckt. Dadurch kann zumindest Luft ungehindert entweichen. Für das viskose Medium hingegen besteht an diesen Übergangsstellen ein starkes Strömungshindernis, so dass sich ein Staudruck vor dem Umschaltventil 100 aufbaut, der das Fluten eines nachgeschalteten Systems mit Schmelze begünstigt.

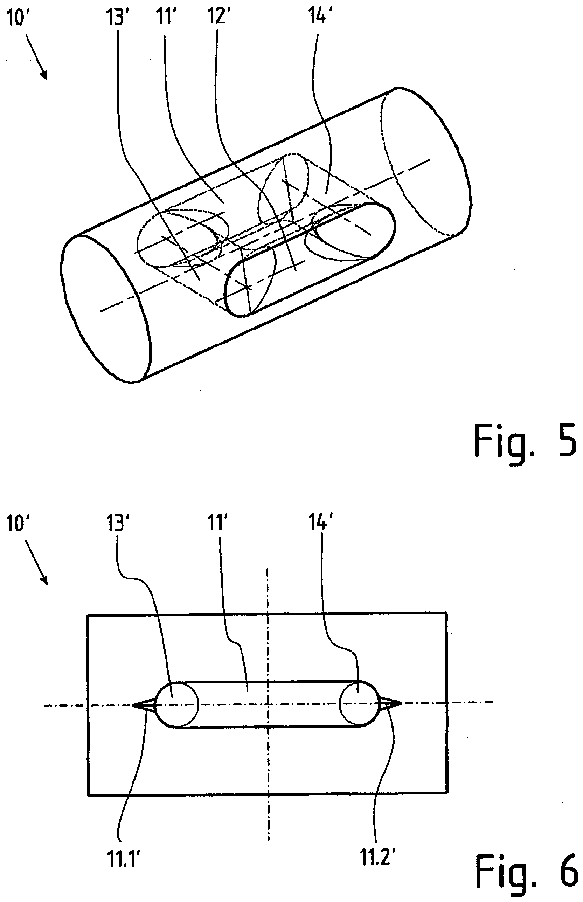

Fig. 6 zeigt ein mögliches Detail des Randbereichs der Auslaufzone 11'. Dort sind endseitig pfeilförmige Nuten 11.1', 11.2' angeformt, die im Quer- wie im Längsschnitt dreieckig sind, also etwa die Form eines Schiffsbugs haben. Der Abstand der Austrittsöffnungen und deren Querschnitt an der Ventilbohrung sind dafür so gewählt, dass in einer Wartungsstellung des Ventilstößels analog Figur 4 nur die pfeilförmigen Fortsätze 11.1', 11.2' in die Austrittsöffnungen 21, 22 hineinragen. Dadurch ergibt sich eine sehr kleine Öffnung, die den abgehenden Volumenstrom des hochviskosen Mediums stark reduziert. Die Strömungsgeschwindigkeit wird so weit herabgesetzt, dass nachgeschaltete Baugruppen langsam mit Schmelze gefüllt werden, oder ein sehr geringer Durchfluss durch das erfindungsgemäße Umschaltventil aufrecht erhalten bleibt, um eine zu lange Verweilzeit der Schmelze im Ventil zu vermeiden, z.B. in Produktionspausen.

## Patentansprüche

1. Umschaltventil (100) für ein hochviskoses Medium, insbesondere für eine Kunstoffschmelze, wenigstens umfassend ein Gehäuse (10) mit wenigstens einer Eintrittsöffnung (23) und wenigstens zwei Austrittsöffnungen (21, 22), welche Öffnungen (21, 22, 23) in einer Ventilbohrung münden, in der ein Ventilstößel (10; 10') gelagert ist, welcher wenigstens eine Ausnehmung aufweist, über die die Eintrittsöffnung (23) mit einer der Ausgangsöffnungen (21, 22) zu verbinden ist,
wobei der Ventilstößel (10; 10') in der Ventilbohrung axial verschiebbar angeordnet ist und eine sich axial erstreckende, nutenförmige Zulaufzone (12) und eine sich axial erstreckende, nutenförmige Auslaufzone (11; 11') aufweist, wobei die Zulaufzone (12) mit der Eintrittsöffnung (23) im Gehäuse (20) und die Auslaufzone (11; 11') mit wenigstens einer der Austrittsöffnungen (21, 22) im Gehäuse (20) in Verbindung zu bringen ist und wobei die Zulauf- und Auslaufzonen (11, 12; 11', 12') über Verbindungskanäle (13, 14) unter Ausbildung eines endlosen Ringkanals verbunden sind,
**dadurch gekennzeichnet,**
- **dass** die Eintrittsöffnung (23) in allen möglichen Stellungen wechselweise mit wenigstens einer der Ausgangsöffnungen (21, 22) verbunden ist;
- **dass** die Zulauf- und Auslaufzonen (11, 12; 11', 12') jeweils an beiden Enden über Verbindungskanäle (13, 14) unter Ausbildung eines endlosen Ringkanals verbunden sind und
- **dass** die Auslaufzone (11; 11') länger ist als ein Innenwandungsabschnitt der Ventilbohrung, durch welchen benachbarte Austrittsöffnungen (21, 22) voneinander getrennt sind.

2. Umschaltventil (100) nach Anspruch 1, **dadurch gekennzeichnet, dass** die axialen Zonen (11, 12; 11', 12') und die Verbindungskanäle (13, 14) jeweils paarweise gleich ausgebildet sind.

3. Umschaltventil (100) nach Anspruch 1 oder 2, **dadurch gekennzeichnet, dass** der Ringkanal derart ausgebildet ist, dass in den Arbeitsstellungen, in denen jeweils eine Verbindung zwischen der Eintrittsöffnung (23) und einer der Austrittsöffnungen (21, 22) hergestellt ist, zwischen der Eintrittsöffnung (23) und der jeweiligen Austrittsöffnung (21, 22) zwei hydraulisch gleiche Fließwege ausgebildet sind.

4. Umschaltventil (100) nach einem der Ansprüche 1 bis 3, **dadurch gekennzeichnet, dass** die Verbindungskanäle (13', 14') radiale Bohrungen sind.

5. Umschaltventil (100) nach einem der Ansprüche 1 bis 3, **dadurch gekennzeichnet, dass** die Verbindungskanäle (13, 14) als bogenförmige Nuten ausgebildet sind, die sich auf dem Außenmantel des Ventilstößels (10) jeweils von einem Ende der Zulaufzone (12) zu einem Ende der Auslaufzone (11) erstrecken.

6. Umschaltventil (100) nach einem der Ansprüche 1 bis 5, **dadurch gekennzeichnet, dass** sich die axialen Eintritts- und Auslaufzonen (11, 12; 11', 12') am Außenmantel des Ventilstößels (10; 10') diametral gegenüber liegen.

7. Umschaltventil (100) nach einem der Ansprüche 1 bis 6, **dadurch gekennzeichnet, dass** der axiale Verschiebeweg des Ventilstößels (10; 10') der Länge der Zulaufzone (12; 12') abzüglich des Durchmessers der Eintrittsöffnung (23) entspricht.

8. Umschaltventil (100) nach Anspruch 7, **dadurch gekennzeichnet, dass** der Abstand der äußeren Begrenzungskanten der Austrittsöffnungen (21, 22) dem Verschiebweg zuzüglich der Länge der Auslaufzone (11; 11') entspricht.

## Claims

1. A switching valve (100) for a highly viscous medium, in particular for a plastic melt, at least comprising a housing (10) with at least one inlet opening (23) and at least two outlet openings (21, 22), which openings (21, 22, 23) open into a valve bore in which is mounted a valve tappet (10; 10') which has at least one recess by way of which the inlet opening (23) is to be connected to one of the outlet openings (21, 22), wherein the valve tappet (10; 10') is arranged in an axially displaceable manner in the valve bore and has an axially extending, groove-shaped run-in zone (12) and an axially extending, groove-shaped run-out zone (11; 11'), wherein the run-in zone (12) is to be connected to the inlet opening (23) in the housing (20) and the run-out zone (11; 11') is to be connected to at least one of the outlet openings (21, 22) in the housing (20) and wherein the run-in and run-out zones (11, 12; 11', 12') are connected by way of connecting ducts (13, 14) so as to form an endless annular duct, **characterized in that**
- the inlet opening (23) is connected in all possible positions alternately to at least one of the outlet openings (21, 22);
- the run-in and run-out zones (11, 12; 11', 12') are respectively connected to both ends by way of connecting ducts (13, 14) so as to form an endless annular duct, and
- the run-out zone (11; 11') is longer than an internal wall portion of the valve bore by which adjacent outlet openings (21, 22) are separated from each other.

2. A switching valve (100) according to claim 1, **characterized in that** in that the axial zones (11, 12; 11', 12') and the connecting ducts (13, 14) are designed in pairs in the same manner in each case.

3. A switching valve (100) according to claim 1 or 2, **characterized in that** the annular duct is designed in such a way that, in the operating positions in which a connection is formed in each case between the inlet opening (23) and one of the outlet openings (21, 22), two hydraulically identical flow paths are formed between the inlet opening (23) and the respective outlet opening (21, 22).

4. A switching valve (100) according to any one of claims 1 to 3, **characterized in that** the connecting ducts (13', 14') are radial bores.

5. A switching valve (100) according to any one of claims 1 to 3, **characterized in that** the connecting ducts (13, 14) are designed in the form of curved grooves which extend on the external face of the valve tappet (10) from one end of the run-in zone (12) to one end of the run-out zone (11) in each case.

6. A switching valve (100) according to any one of claims 1 to 5, **characterized in that** the axial inlet and run-out zones (11, 12; 11', 12') are arranged in a diametrically opposed manner on the external face of the valve tappet (10; 10').

7. A switching valve (100) according to any one of claims 1 to 6, **characterized in that** the axial displacement path of the valve tappet (10; 10') corresponds to the length of the run-in zone (12; 12') minus the diameter of the inlet opening (23).

8. A switching valve (100) according to claim 7, **characterized in that** the distance between the outer boundary edges of the outlet openings (21, 22) corresponds to the displacement path plus the length of the run-out zone (11; 11').

## Revendications

1. Soupape de commutation (100) pour un milieu à viscosité élevée, en particulier pour une masse fondue de matière plastique, comprenant au moins un boîtier (10) doté d'au moins une ouverture d'entrée (23) et d'au moins deux ouvertures de sortie (21, 22), lesquelles ouvertures (21, 22, 23) débouchent dans un alésage de soupape dans lequel est logé un poussoir de soupape (10; 10') qui présente au moins un évidement par l'intermédiaire duquel l'ouverture d'entrée (23) est à relier à l'une des ouvertures de sortie (21, 22), dans lequel ledit poussoir de soupape (10; 10') est disposé de manière à pouvoir être déplacé de manière axiale dans l'alésage de soupape et présente une zone d'admission (12) en forme de rainure s'étendant axialement et une zone d'évacuation (11; 11') en forme de rainure s'étendant axialement, dans lequel la zone d'admission (12) doit être mise en communication avec l'ouverture d'entrée (23) dans le boîtier (20) et la zone d'évacuation (11; 11') doit être mise en communication avec l'une au moins des ouvertures de sortie (21, 22) dans le boîtier (20), et dans lequel les zones d'admission et d'évacuation (11, 12; 11', 12') sont reliées par l'intermédiaire de canaux de liaison (13, 14) tout en formant un canal annulaire sans fin,
**caractérisé en ce**
- **que** l'ouverture d'entrée (23) est reliée, dans toutes les positions possibles, en alternance à l'une au moins des ouvertures de sortie (21, 22);
- **que** les zones d'admission et d'évacuation (11, 12; 11', 12') sont reliées chacune aux deux extrémités par l'intermédiaire de canaux de liaison (13, 14) tout en formant un canal annulaire sans fin, et
- **que** la zone d'évacuation (11; 11') est plus longue qu'une section de paroi intérieure de l'alésage de soupape, par laquelle des ouvertures de sortie (21, 22) adjacentes sont séparées les unes des autres.

2. Soupape de commutation (100) selon la revendication 1, **caractérisée en ce que** les zones axiales (11, 12; 11', 12') et les canaux de liaison (13, 14) sont réalisés respectivement par paire de manière identique.

3. Soupape de commutation (100) selon la revendication 1 ou 2, **caractérisée en ce que** le canal annulaire est réalisé de telle manière que deux trajets d'écoulement identiques d'un point de vue hydraulique sont réalisés entre l'ouverture d'entrée (23) et l'ouverture de sortie (21, 22) respective dans les positions de travail dans lesquelles respectivement une liaison entre l'ouverture d'entrée (23) et l'une des ouvertures de sortie (21, 22) est établie.

4. Soupape de commutation (100) selon l'une quelconque des revendications 1 à 3, **caractérisée en ce que** les canaux de liaison (13', 14') sont des alésages radiaux.

5. Soupape de commutation (100) selon l'une quelconque des revendications 1 à 3, **caractérisée en ce que** les canaux de liaison (13, 14) sont réalisés sous la forme de rainures en forme d'arc lesquelles s'étendent sur l'enveloppe extérieure du poussoir de soupape (10) respectivement d'une extrémité de la zone d'admission (12) en direction d'une extrémité de la zone d'évacuation (11).

6. Soupape de commutation (100) selon l'une quelconque des revendications 1 à 5, **caractérisée en ce que** les zones d'entrée et d'évacuation (11, 12; 11', 12') axiales se font face de manière diamétrale au niveau de l'enveloppe extérieure du poussoir de soupape (10; 10').

7. Soupape de commutation (100) selon l'une quelconque des revendications 1 à 6, **caractérisée en ce que** le trajet de déplacement axial du poussoir de soupape (10; 10') correspond à la longueur de la zone d'admission (12; 12') moins le diamètre de l'ouverture d'entrée (23).

8. Soupape de commutation (100) selon la revendication 7, **caractérisée en ce que** la distance entre les arêtes de délimitation extérieures des ouvertures de sortie (21, 22) correspond au trajet de déplacement plus la longueur de la zone d'évacuation (11; 11').
